# EUROPÄISCHE PATENTSCHRIFT

(11) **EP 1 991 352 B1**
(45) Veröffentlichungstag und Bekanntmachung des Hinweises auf die Patenterteilung: **07.10.2009**
(21) Anmeldenummer: 07703092.2
(22) Anmeldetag: 29.01.2007
(51) Int. Cl.: B01J 31/02, C07B 61/00

(54) **VERFAHREN ZUR HERSTELLUNG ORGANISCHER SUBSTANZEN**
METHOD FOR PRODUCING ORGANIC SUBSTANCES
PROCÉDÉ POUR PRÉPARER DES SUBSTANCES ORGANIQUES

(30) Priorität: 06.02.2006 DE 102006005579
(43) Veröffentlichungstag der Anmeldung: 19.11.2008
(73) Patentinhaber: Cognis IP Management GmbH, 40589 Düsseldorf (DE)
(72) Erfinder: BUSCH, Stefan, 46047 Oberhausen (DE); HÖFER, Rainer, 40477 Düsseldorf (DE); HUESKEN, Hendrik, 40789 Monheim (DE); BIRNBRICH, Paul, 42719 Solingen (DE)
(86) Internationale Anmeldenummer: PCT/EP2007/000726
(87) Internationale Veröffentlichungsnummer: WO 2007/090533

(56) Entgegenhaltungen:
- EP-A- 1 512 460
- WO-A-03/087110
- WO-A-03/087111
- DE-A1- 4 332 964
- DE-A1- 10 220 547
- LIU S ET AL: "Toward green catalytic synthesis-Transition metal-catalyzed reactions in non-conventional media" JOURNAL OF MOLECULAR CATALYSIS. A, CHEMICAL, Bd. 270, Nr. 1-2, 11. Januar 2007 (2007-01-11), Seiten 1-43, XP022044418
- LANDINI D ET AL: "Phase transfer catalysis (PTC): search for alternative organic solvents , even environmentally benign" JOURNAL OF MOLECULAR CATALYSIS. A, CHEMICAL, Bd. 204-205, 11. Juni 2003 (2003-06-11), Seiten 235-243, XP009112038 AMSTERDAM, NL

## Beschreibung

### Gebiet der Erfindung

Die Erfindung betrifft ein Verfahren zur Herstellung von organische Substanzen durch Umsetzung von entsprechenden Reaktanden in Gegenwart von Phasentransferkatalysatoren in einem mindestens 2-phasigen Reaktionsmedium (fortan auch als "Reaktionssystem" bezeichnet) enthaltend ionische Flüssigkeiten und Wasser.

### Stand der Technik

Unter "Phasentransfer-Katalyse" (oft als PTC abgekürzt) versteht man eine in der organischen Synthese wichtige Methode, bei der in der Regel ein anionisches Reagens aus der wässrigen oder festen Phase in eine organische Phase überführt wird. Das transferierte Reagenz besitzt dann, aufgrund der geringeren Hydratisierung, der erhöhten Konzentration und der größeren Nähe zum Reaktanden eine deutlich erhöhte Reaktivität für die beabsichtigte Umsetzung. Gängige Reagenzien, die transferiert werden können, sind:
a) Basen wie OH⁻, HCO₃⁻
b) Nucleophile wie Fluorid, Chlorid, Bromid, Iodid, CN⁻, RO⁻, RCO₂⁻
c) Oxidationsmittel wie Permanganat, Perchromat
d) Reduktionsmittel wie BH₄⁻

Die Vorteile der PTC sind vor allem höhere Ausbeuten, mildere Reaktionsbedingungen, geringere Verunreinigungen und leichtere Aufarbeitung des Reaktionsgemisches.

Eine sehr bedeutende Anwendung findet wässriges Natriumhydroxid, das unter Phasentransfer-Bedingungen Alkoholate, Amide und Hydride ersetzen kann. Nucleophile Substitutionen, Dehydrohalogenierungen, Oxidationen und Reduktionen sowie zahlreiche andere Reaktionen, auch z.B. für die Herstellung von Polymeren wichtige Reaktionen sind der PTC zugänglich. Der Mechanismus der nucleophilen Substitution mittels PTC läßt sich am Beispiel der häufig verwendeten quartären Ammonium-Kationen plausibel machen:

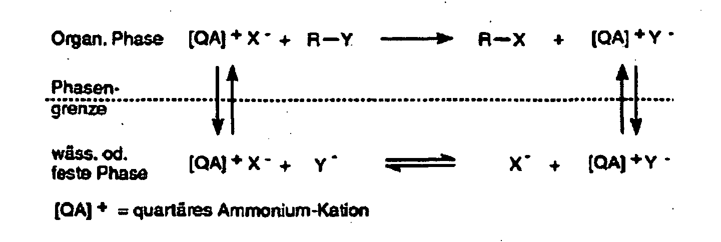

Das Ammonium-Kation bildet mit dem Reagens X⁻ ein Ionenpaar, für das sich ein Konzentrations-Gleichgewicht zwischen den beiden Phasen einstellt. X⁻ reagiert dann schnell in der organanischen Phase mit dem Reaktanten RY unter Bildung des Produktes RX und einem neuen Ionenpaar von Y⁻ mit dem Ammonium-Kation. Auch für dieses stellt sich ein Konzentrations-Gleichgewicht zwischen den beiden Phasen ein, wobei der Katalysator in der wässrigen oder festen Phase das abgespaltene Y⁻ gegen ein neues Reagenz X⁻ austauscht und damit der Katalysezyklus von neuem beginnen kann.
Typischerweise finden PTC-katalysierte Reaktionen in einem 2-Phasen-System statt, deren eine Phase Wasser und deren andere Phase ein organisches Lösungsmittel ist. Letzteres ist aus Gründen seiner Flüchtigkeit häufig ein Problem.

Unter ionischen Flüssigkeiten versteht man im allgemeinen organische Salze oder deren Gemische, deren Schmelzpunkt unterhalb von 100 °C liegt (vergl. den Übersichtsartikel von P. Wasserscheid u. W. Keim, Angew. Chem. 2001 (112), S. 3773- 3789).

Die Druckschrift von Landini et al.: "Phase transfer catalysis (PTC): search for alternative organic solvents, even environmentally benign", JOURNAL OF MOLECULAR CATALYSIS. A, CHEMICAL, Bd. 204-205, Seiten 235-243, 11. Juni 2003, behandelt Möglichkeiten zur Verbesserung bekannter Phasentransferkatalysator-Systeme. Vorgeschlagen werden hierzu aliphatische Ether, Ester und Ketone wie DMC, MTAE, MIAK, MIBK als Lösungsmittel neben Wasser als zweiter Phase. Ionische Flüssigkeiten werden nicht erwähnt.

Der später am 11. Januar 2007 veröffentlichte Übersichtsartikel von Liu et al.: "Toward green catalytic synthesis-Transition metal-catalyzed reactions in non-conventional media", JOURNAL OF MOLECULAR CATALYSIS. A, CHEMICAL, Bd. 270, Nr. 1-2, Seiten 1-43, schlägt entweder Phasentransferkatalysatoren oder ionische Flüssigkeiten, letztere als Lösungsmittel und/oder phasentransferkatalytsche Additive, vor, z.B. Heck-Reaktionen in einem Isooctan/Wasser/Aliquat-336 System, Suzuki-Reaktionen von Arylhalogeniden in einem Wasser/TBAB/Na₂CO₃ System, oder Epoxidierungen von α,β-ungesättigten Carbonylverbindungen in einem Wasser-H₂O₂/bmim.PF₆ System.

### Beschreibung der Erfindung

Aufgabe der vorliegenden Erfindung war es, ein verbessertes Verfahren zur Herstellung organischer Substanzen bereitzustellen, die durch Phasentransfer-katalysierte Re- aktionen der jeweils miteinander umzusetzenden Reaktanden zugänglich sind. Von ganz besonderer Bedeutung sind in diesem Zusammenhang die dem Fachmann geläufigen sogenannten SN2-Reaktionen, also Reaktionen vom Typ der nucleophilen Substitution.

Gegenstand der vorliegenden Erfindung ist ein Verfahren zur Herstellung organischer Substanzen, wobei man die Umsetzung der Reaktanden in einem Reaktionssystem durchführt, das unter Reaktionsbedingungen zwei miteinander nicht mischbare flüssige Phasen (a) und (b) und ein oder mehrere Phasentransferkatalysatoren enthält, wobei es sich bei der Phase (a) um ein oder mehrere ionische Flüssigkeiten und bei Phase (b) um Wasser handelt und wobei folgende Maßgaben gelten:
(i) bei der ionischen Flüssigkeit handelt es sich um ein organisches Salz mit einem Schmelzpunkt unterhalb von 100 °C;
(ii) die Phasen (a) und (b) liegen unter den Reaktionsbedingungen jeweils in flüssiger Form vor;
(iii) bei dem Phasentransferkatalysator handelt es sich um ein organisches Salz, das unter den Reaktionsbedingungen in mindestens einer der beiden Phasen (a) bzw. (b) gelöst vorliegt;
(iv) der Schmelzpunkt des Phasentransferkatalysators liegt mindestens um 2 °C höher als der Schmelzpunkt der ionischen Flüssigkeit,
(v) sofern die ionische Flüssigkeit und der Phasentrasferkatalystaor jeweils aus mehr als einer Species bestehen gilt: der Schmelzpunkt des niedrigstschemelzenden Species des Phasentransferkatalysators liegt mindestens um 2 °C höher als der Schmelzpunkt der höchstschmelzenden Species der ionischen Flüssigkeit.

Die Art der gemäß dem erfindungsgemäßen Verfahren zugänglichen organischen Substanzen ist an sich nicht beschränkt. Sehr wohl ist das erfindungsgemäße Verfahren dadurch beschränkt, dass es sich bei der Umsetzung der Reaktanden um eine Reaktion handeln muss, die durch Phasentransferkatalyse beschleunigt wird:

Der Klarheit halber sei der bezüglich des Reaktionssystems verwendete Ausdruck "das unter Reaktionsbedingungen zwei miteinander nicht mischbare flüssige Phasen (a) und (b) und ein oder mehrere Phasentransferkatalysatoren enthält" näher erläutert:

Unter "miteinander nicht mischbare flüssige Phasen" ist zu verstehen, daß die ionische Flüssigkeit (a) und das Wasser (b) nicht ineinander löslich sind und mithin als zwei Phasen vorliegen. Unter nicht ineinander löslich ist zu verstehen, daß die Löslichkeit von (a) in (b) und von (b) in (a) jeweils unterhalb von 100 g/l, vorzugsweise unterhalb von 50 g/l und insbesondere unterhalb von 10 g/l liegt.

In einer Ausführungsform sind die für die Herstellung der zu synthetisierenden organischen Substanzen eingesetzten Reaktanden in den Phasen (a) und/oder (b) zumindest anteilsweise löslich.

Im übrigen können die Phasen (a) und (b) gewünschtenfalls weitere Substanzen in gelöster Form enthalten.

### Phasentransferkatalysatoren

Phasentransferkatalysatoren sind im Sinne der vorliegenden Erfindung organische Substanzen, die die Umsetzung der Reaktanden zu den herzustellenden Verbindungen beschleunigen. Wie bereits aufgeführt gelten für die Phasentransferkatalysatoren die oben genannten Bedingungen (iii) bis (v).

Als Phasentransferkatalysatoren können praktisch alle dem Fachmann für diesen Zweck einschlägig bekannten Substanzen verwendet werden. Geeignete Beispiele für geeignete Phasentransferkatalysatoren sind die Gruppen der Tetraalkylammoniumsalze, Benzyltrialkylammoniumsalze, Tetraalkylphosphoniumsalze, Benzyltrialkylphosphoniumsalze und deren Gemische. Im Sinne des erfindungsgemäßen Verfahrens sind die Ammoniumsalze gegenüber den Phosphoniumsalzen bevorzugt und insbesondere eignen sich die Tetra-n-butylammonium-, Tri-n-butylmethylammonium- und Benzyltriethylammoniumsalze mit den Anionen Chlorid, Bromid und Hydrogensulfat. Ganz besonders bevorzugt als Phasentransferkatalysator ist Trioctylmethylammoniumchlorid, das kommerziell unter der Bezeichnung Aliquat 336 erhältlich ist (Hersteller: Fa. Cognis). Ein weiterer im Rahmen der vorliegenden Erfindung bevorzugter Phasentransferkatalysator ist Aliquat HTA-1 (Hersteller: Fa. Cognis).

Der Phasentransferkatalysatoren wird in katalytischen Mengen eingesetzt. Die Menge hängt dabei von der Aktivität und Stabilität des Katalysators bei den gewählten Reaktionsbedingungen ab und ist der jeweiligen Reaktion anzupassen. Die Menge der Phasentransferkatalysatoren kann dabei zwischen 0,1 und 25 Mol-% - bezogen auf die Summe der eingesetzten Reaktanden - variieren und liegt besonders bevorzugt im Bereich von 0,5 bis 5 und insbesondere von 1 bis 3 Mol-%.

### Ionische Flüssigkeiten

Unter ionischen Flüssigkeiten werden im Rahmen der vorliegenden Erfindung organische Salze verstanden, die einen Schmelzpunkt unterhalb von 100 °C aufweisen. Diese Definition entspricht der in der Fachwelt allgemein üblichen Konvention.

In einer Ausführungsform werden solche ionischen Flüssigkeiten eingesetzt, die einen Schmelzpunkt unterhalb von 90 °C aufweisen.

In einer weiteren Ausführungsform werden solche ionischen Flüssigkeiten eingesetzt, die einen Schmelzpunkt unterhalb von 60 °C aufweisen.

Ausdrücklich sei nochmals festgestellt, dass es sich sowohl bei den ionischen Flüssigkeiten (a) als auch bei den Phasentransferkatalysatoren um ionische organische Substanzen handelt. Gleichwohl ist durch die Definition des erfindungsgemäßen Verfahrens ausgeschlossen, dass in einem Reaktionssystem als ionische Flüssigkeit (a) und Phasentransferkatalysator identische Substanzen eingesetzt werden. Dies ist durch die Bedingungen (iv) und (v) ausgedrückt (siehe oben).

### Durchführung des Verfahrens

Hinsichtlich der Durchführung des erfindungsgemäßen Verfahrens gelten an sich keine besonderen Einschränkungen.

In einer Ausführungsform wird das Verfahren kontinuierlich durchgeführt.

In einer Ausführungsform wird das Verfahren diskontinuierlich (batchweise) durchgeführt.
Dabei können die Phasen (a) und (b) in Mengenverhältnissen im Bereich von 90 : 10 bis 10 : 90 eingesetzt werden.

Nach abgeschlossener Reaktion können zur Aufarbeitung an sich alle dem Fachmann hierfür bekannten Trennungs- und Reinigungsoperationen eingesetzt werden. Sofern die hergestellte organische Substanz nicht wasserlöslich ist und in der ionischen Flüssigkeit gelöst vorliegt, kann sie aus dieser mittels destillativer Verfahren oder durch Extraktion mit überkritischem Kohlendioxid gewonnen werden.

### Beispiele

### Abkürzungen:

MTBE = Methyl-tert.butyl-ether
MIBK = Methyl-isobutyl-keton
Aliquat 336 = Phasentransfer-Katalysator (Fa. Cognis)
OMImCl = Octylmethylimidazoliumchlorid

### Beispiel 1 (zum Vergleich)

### (C-Alkylierung von Desoxybenzoin in Gegenwart von MTBE als Lösemittel).

In einem mit Stickstoff inertisierten Reaktor (ca. 300mL Reaktorvolumen) wurde Desoxybenzoin (18,83g, 96mmol) zusammen mit einem fünffachen molaren Überschuss an 50%iger Natronlauge (53,82g, 480mmol) und MTBE (53,82g) vorgelegt. Dazu wurde n-Decan (3,30g) (interner Standard für die GC-Auswertung) zugegeben. Unter stetigem Rühren bei einer Rührerdrehzahl von 500 Umdrehungen pro Minute wurde die Mischung auf eine Reaktionstemperatur von 45°C erwärmt. Bei 45°C wurden 5,5g Aliquat 336 (6mol% bezogen auf Desoxybenzoin, Hersteller Cognis Deutschland GmbH & Co. KG) und 14,16g (=120mol% bezogen auf Desoxybenzoin) Isopropylbromid zugegeben. Damit begann die Reaktionszeit. Die gesamte Reaktionsmenge betrug 150g, was den Reaktor etwa zur Hälfte füllte. Der Umsatz wurde mittels Gaschromatographie (GC) bestimmt.
Ergebnis: Umsatz nach 90min: 28%

### Beispiel 2 (zum Vergleich)

### (C-Alkylierung von Desoxybenzoin in Gegenwart von MIBK als Lösemittel)

In einem mit Stickstoff inertisierten Reaktor (ca. 300mL Reaktorvolumen) wurde Desoxybenzoin (18,83g, 96mmol) zusammen mit einem fünffachen molaren Überschuss an 50%iger Natronlauge (53,82g, 480mmol) und MIBK (53,82g) vorgelegt. Dazu wurde n-Decan (3,30g) (interner Standard für die GC-Auswertung) zugegeben. Unter stetigem Rühren bei einer Rührerdrehzahl von 500 Umdrehungen pro Minute wurde die Mischung auf eine Reaktionstemperatur von 45°C erwärmt. Bei 45°C wurden 5,5g Aliquat 336 (6mol% bezogen auf Desoxybenzoin, Hersteller Cognis Deutschland GmbH & Co. KG) und 14,16g (=120mol% bezogen auf Desoxybenzoin) Isopropylbromid zugegeben. Damit begann die Reaktionszeit. Die gesamte Reaktionsmenge betrug 150g, was den Reaktor etwa zur Hälfte fülle. Der Umsatz wurde mittels GC bestimmt.
Ergebnis: Umsatz nach 90min: 75%

### Beispiel 3 (zum Vergleich)

### (C-Alkylierung von Desoxybenzoin in Gegenwart von MTBE als Lösemittel ohne einen Phasen Transfer Katalysator)

In einem mit Stickstoff inertisierten Reaktor (ca. 300mL Reaktorvolumen) wurde Desoxybenzoin (18,83g, 96mmol) zusammen mit einem fünffachen molaren Überschuss an 50%iger Natronlauge (53,82g, 480mmol) und MTBE (53,82g,) vorgelegt. Dazu wurde n-Decan (3,30g) (interner Standard für die GC-Auswertung) zugegeben. Unter stetigem Rühren bei einer Rührerdrehzahl von 500 Umdrehungen pro Minute wurde die Mischung auf eine Reaktionstemperatur von 45°C erwärmt. Bei 45°C wurden 14,16g (=120mol% bezogen auf Desoxybenzoin) Isopropylbromid zugegeben. Damit begann die Reaktionszeit. Die gesamte Reaktionsmenge betrug 150g, was den Reaktor etwa zur Hälfte füllte. Der Umsatz wurde mittels GC bestimmt.
Ergebnis: Umsatz nach 90min: 0%

### Beispiel 4 (erfindungsgemäß)

### (C-Alkylierung von Desoxybenzoin in Gegenwart von OMImCl als Lösemittel und Aliquat 336 als Katalysator)

In einem mit Stickstoff inertisierten Reaktor (ca. 300mL Reaktorvolumen) wurde Desoxybenzoin (18,83g, 96mmol) zusammen mit einem fünffachen molaren Überschuss an 50%iger Natronlauge (53,82g, 480mmol) und OMImCl (53,82g,) vorgelegt. Dazu wurde n-Decan (3,30g) (interner Standard für die GC-Auswertung) zugegeben. Unter stetigem Rühren bei einer Rührerdrehzahl von 500 Umdrehungen pro Minute wurde die Mischung auf eine Reaktionstemperatur von 45°C erwärmt. Bei 45°C wurden 5,5g Aliquat 336 (6mol% bezogen auf Desoxybenzoin, Hersteller Cognis Deutschland GmbH & Co. KG) und 14,16g (=120mol% bezogen auf Desoxybenzoin) Isopropylbromid zugegeben. Damit begann die Reaktionszeit. Die gesamte Reaktionsmenge betrug 150g, was den Reaktor etwa zur Hälfte füllte. Der Umsatz wurde mittels GC bestimmt.
Ergebnis: Umsatz nach 90min: 91%

## Patentansprüche

1. Verfahren zur Herstellung organischer Substanzen, wobei man die Umsetzung der Reaktanden in einem Reaktionssystem durchführt, das unter Reaktionsbedingungen zwei miteinander nicht mischbare flüssige Phasen (a) und (b) und ein oder mehrere Phasentransferkatalysatoren enthält, **dadurch gekennzeichnet, dass** es sich bei der Phase (a) um ein oder mehrere ionische Flüssigkeiten und bei Phase (b) um Wasser handelt, wobei folgende Maßgaben gelten: (i) bei der ionischen Flüssigkeit handelt es sich um ein organisches Salz mit einem Schmelzpunkt unterhalb von 100 °C; (ii) die Phasen (a) und (b) liegen unter den Reaktionsbedingungen jeweils in flüssiger Form vor; (iii) bei dem Phasentransferkatalysator handelt es sich um ein organisches Salz, das unter den Reaktionsbedingungen in mindestens einer der beiden Phasen (a) bzw. (b) gelöst vorliegt; (iv) der Schmelzpunkt des Phasentransferkatalysators liegt mindestens um 2 °C höher als der Schmelzpunkt der ionischen Flüssigkeit, (v) sofern die ionische Flüssigkeit und der Phasentrasferkatalystaor jeweils aus mehr als einer Species bestehen gilt: der Schmelzpunkt des niedrigstschmelzenden Species des Phasentransferkatalysators liegt mindestens um 2 °C höher als der Schmelzpunkt der höchstschmelzenden Species der ionischen Flüssigkeit.

2. Verfahren nach Anspruch 1, wobei der Phasentransferkatalystor ein Tetra-Alkylammoniumsalz ist.

3. Verfahren nach Anspruch 2, wobei der Phasentransferkatalystor Trioctylmethylammoniumchlorid ist.

## Claims

1. Process for preparing organic substances by performing the conversion of the reactants in a reaction system which comprises two liquid phases (a) and (b) immiscible with one another under reaction conditions and one or more phase transfer catalysts, **characterized in that** phase (a) comprises one or more ionic liquids and phase (b) comprises water, where the following provisos apply: (i) the ionic liquid is an organic salt with a melting point below 100°C; (ii) the phases (a) and (b) are each present in liquid form under the reaction conditions; (iii) the phase transfer catalyst is an organic salt which is present dissolved in at least one of the two phases (a) and (b) under the reaction conditions; (iv) the melting point of the phase transfer catalyst is at least 2°C higher than the melting point of the ionic liquid, (v) when the ionic liquid and the phase transfer catalyst each consist of one or more species: the melting point of the lowest-melting species of the phase transfer catalyst is at least 2°C higher than the melting point of the highest-melting species of the ionic liquid.

2. Process according to Claim 1, wherein the phase transfer catalyst is a tetraalkylammonium salt.

3. Process according to Claim 2, wherein the phase transfer catalyst is trioctylmethylammonium chloride.

## Revendications

1. Procédé pour la préparation de substances organiques, dans lequel on effectue la réaction des partenaires réactionnels dans un système de réaction qui contient, dans les conditions réactionnelles deux phases liquides (a) et (b) non miscibles entre elles et un ou plusieurs catalyseurs de transfert de phase, **caractérisé en ce que** la phase (a) consiste en un ou plusieurs liquides ioniques et la phase (b) consiste en eau, les dispositions suivantes s'appliquant : (i) le liquide ionique consiste en un sel organique ayant un point de fusion inférieur à 100 °C ; (ii) dans les conditions réactionnelles les phases (a) et (b) se présentent chacune sous forme liquide ; (iii) le catalyseur de transfert de phase consiste en un sel organique qui, dans les conditions réactionnelles, est présent dissous dans au moins l'une des deux phases (a) et (b) ; (iv) le point de fusion du catalyseur de transfert de phase est supérieur d'au moins 2 °C au point de fusion du liquide ionique, (v) si le liquide ionique et le catalyseur de transfert de phase consistent chacun en plus d'une espèce il s'applique que : le point de fusion de l'espèce ayant le plus bas point de fusion du catalyseur de transfert de phase est supérieur d'au moins 2 °C au point de fusion de l'espèce ayant le plus haut point de fusion du liquide ionique.

2. Procédé selon la revendication 1, dans lequel le catalyseur de transfert de phase est un sel de tétraalkylammonium.

3. Procédé selon la revendication 2, dans lequel le catalyseur de transfert de phase est le chlorure de trioctylméthylammonium.
